# EUROPEAN PATENT APPLICATION

(11) **EP 1 736 523 A1**
(43) Date of publication of application: **27.12.2006**
(21) Application number: 05720183.2
(22) Date of filing: 07.03.2005
(51) Int. Cl.: C09K 11/59, H01J 29/20, H01J 31/12

(54) **MANGANESE-ACTIVATED ZINC SILICATE PHOSPHOR AND IMAGE DISPLAY USING SAME**

(30) Priority: 11.03.2004 JP 2004069223
(71) Applicant: KABUSHIKI KAISHA TOSHIBA, Tokyo 105-8001 (JP)
(72) Inventor: YOKOSAWA, Nobuyuki c/o Int. Property Division,, Minato-ku, Tokyo 105-8001 (JP); ONO, Yuuki c/o Int. Property Division,, Minato-ku, Tokyo 105-8001 (JP); ITO, Takeo c/o Int. Property Division,, Minato-ku, Tokyo 105-8001 (JP)
(74) Representative: HOFFMANN EITLE
(86) International application number: PCT/JP2005/003911
(87) International publication number: WO 2005/087895

(57) **Abstract**

A phosphor screen (6) is formed by using a manganese-activated zinc silicate phosphor having an average particle size of 0.5 to 2.0 µm, and a zinc-to-silicon atomic ratio (Zn/Si) of 1.65 to 1.85.

## Description

### Technical Field

The present invention relates to a manganese-activated zinc silicate phosphor and an image display device using the same and, more particularly, to a manganese-activated zinc silicate phosphor applied to a phosphor screen which forms an image upon irradiation with an electron beam emitted from an electron source in a vacuum enclosure, and an image display device including the same.

### Background Art

Recently, a flat image display device in which a large number of electron emission elements as electron sources are arranged and opposed to a phosphor screen is being developed as a next-generation image display device. Although electron emission elements have various types, all such elements basically use field emission, and a display device using any of these electron emission elements is generally called a field emission display (to be referred to as an FED hereinafter). Of these FEDs, a display device using a surface conduction type electron emission element is also called a surface conduction type electron emission display (to be referred to as an SED hereinafter), but the term FED is used as a general term including the SED in this application.

The FED generally has a front substrate and back substrate opposed to each other with a predetermined spacing between them. These substrates form a vacuum enclosure as the edges of the substrates are bonded to each other via a rectangular frame-like side wall. The interior of the vacuum vessel is maintained at high vacuum having a vacuum degree of about 10⁻⁴ Pa or better. Also, to bear the atmospheric load applied to the back substrate and front substrate, a plurality of support members are formed between these substrates.

A phosphor screen including red, blue, and green phosphor layers is formed on the inner surface of the front substrate (face plate), a metal back layer is formed on the phosphor screen, and a large number of electron emission elements for emitting electrons which excite the phosphor to emit light are formed on the inner surface of the back substrate (rear plate). In addition, many scanning lines and signal lines are formed in a matrix and connected to the electron emission elements.

An anode voltage is applied to the phosphor screen, and electron beams emitted from the electron emission elements are accelerated by the anode voltage and collide against the phosphor screen, thereby causing the phosphor to emit light and display an image.

Since the spacing between the front substrate and back substrate can be set to a few mm or less in this FED, the FED can be made lighter and thinner than a cathode-ray tube (CRT) presently used in a TV set or computer display.

To obtain practical display characteristics by the FED designed as described above, it is necessary to use a phosphor similar to that of the conventional cathode-ray tube, and use a phosphor screen obtained by forming a thin aluminum film called a metal back layer on a phosphor layer. In this case, the anode voltage to be applied to the phosphor screen is at least a few kilovolts, and is desirably a high voltage of 10 kV or more.

Unfortunately, the distance between the front substrate and back substrate cannot be largely increased from the viewpoint of the resolution or the characteristics of the support members, and is set to about 1 to 2 mm. When a high voltage is applied to this narrow spacing, a strong electric field forms and readily causes discharge (vacuum arc discharge) between the two substrates. If abnormal discharge like this occurs, a discharge electric current from a few amps to a few hundred amps instantaneously flows, and this may destroy or damage the electron emission elements in the cathode portion or the phosphor screen in the anode portion.

If the distance between the metal back layer of the front substrate and the electron sources of the back substrate varies, an electric current easily leaks from a narrower portion, so the distance is required to be constant, and the metal back layer must be smoothed for this purpose. Since the metal back layer is formed on the phosphor screen, smoothing the phosphor screen is important. To smoothen the phosphor screen, it is possible to decrease the particle size of the phosphor, but decreasing the particle size of the phosphor causes the disadvantage that the luminance of the phosphor decreases.

### Disclosure of Invention

It is an object of the present invention to obtain a zinc silicate phosphor having a small particle size and capable of forming a smooth phosphor screen while maintaining sufficient luminance.

It is another object of the present invention to obtain an image display device which has a smooth phosphor screen using a zinc silicate phosphor having a small particle size while maintaining sufficient luminance, and can stably obtain a sufficiently bright image without causing any abnormal discharge.

A manganese-activated zinc silicate phosphor according to the present invention having an average particle size of 0.5 to 2.0 µm, and an atomic ratio (Zn/Si) of zinc to silicon is 1.65 to 1.85. An image display device according to the present invention comprises a face plate, an electron source opposed to the face plate, a phosphor screen which is formed on one of two major surfaces, which is close to the electron source, of the face plate, emits light by an electron beam emitted from the electron source, and includes a phosphor layer containing a manganese-activated zinc silicate phosphor in which an average particle size is 0.5 to 2.0 µm and an atomic ratio (Zn/Si) of zinc to silicon is 1.65 to 1.85, and a metal back layer covering the phosphor screen.

### Brief Description of Drawings

FIG. 1 is a perspective view showing an example of an image display device of the present invention;
FIG. 2 is a sectional view taken along a line A - A' in FIG. 1; and
FIG. 3 is a graph showing the relationships between the Zn/Si atomic ratios and relative luminances concerning manganese-activated zinc silicate phosphors having different particle sizes.

### Best Mode for Carrying Out the Invention

The present inventors made extensive studies to decrease the particle size of a manganese-activated zinc silicate phosphor without lowering the emission luminance, and have found that high emission luminance can be obtained by changing the atomic ratio of zinc to silicon even when the particle size is small, thereby achieving the present invention.

A manganese-activated zinc silicate phosphor of the present invention has an average particle size of 0.5 to 2.0 µm and a zinc-to-silicon atomic ratio (Zn/Si) of 1.65 to 1.85, and is represented by formula (1) below.

Znx (SiO₄) y ; Mn²⁺ (1)

(wherein x/y = 1.65 to 1.85)

The conventional manganese-activated zinc silicate phosphor generally used in an image forming apparatus using emission by electron beam irradiation has an average particle size of 4 to 6 µm, and has a maximum luminance when the Zn/Si atomic ratio represented by x/y is 1.4 to 1.6. In the present invention, however, it is possible to obtain a manganese-activated zinc silicate phosphor having high emission luminance equivalent to that of the conventional manganese-activated zinc silicate phosphor by setting the average particle size to 0.5 to 2.0 µm, and the Zn/Si atomic ratio to 1.65 to 1.85.

Also, an image forming apparatus of the present invention comprises a face plate, an electron source opposed to the face plate, a phosphor screen which is formed on one of the two major surfaces, which is close to the electron source, of the face plate, emits light by an electron beam emitted from the electron source, and includes a phosphor layer containing the manganese-activated zinc silicate phosphor described above, and a metal back layer covering the phosphor screen.

In the present invention, a phosphor screen having higher smoothness can be obtained by using the above-mentioned manganese-activated zinc silicate phosphor having a particle size smaller than that of the conventional phosphor. When a metal back layer is formed on this phosphor screen, the smoothness of the metal back layer also improves. Accordingly, an image display device of the present invention can display high-quality images because the distance between the metal back layer and electron source is held constant to prevent easy occurrence of abnormal discharge, and the luminance is high.

The manganese-activated zinc silicate phosphor of the present invention has an average particle size of 0.5 to 2.0 µm. If the average particle size is less than 0.5 µm, the calcining time must be shortened, and the luminance decreases. If the average particle size exceeds 2.0 µm, this increase in average particle size worsens the smoothness of the phosphor screen. The average particle size is preferably 1.0 to 1.9 µm, and more preferably, 1.5 to 1.8 µm.

Also, the manganese-activated zinc silicate phosphor of the present invention has a Zn/Si atomic ratio of 1.65 to 1.85. If the Zn/Si atomic ratio is less than 1.65 or exceeds 1.85, the luminance becomes equal to or lower than that of the conventional phosphor having an average particle size of 4 to 6 µm and containing an optimum composition. The Zn/Si atomic ratio is preferably 1.7 to 1.8.

The manganese-activated zinc silicate phosphor of the present invention has an afterglow time of 8 ms or less, and preferably, 6 to 8 ms. If the afterglow time is less than 6 ms, the luminance often decreases. If the afterglow time exceeds 8 ms, the visibility of afterglow often poses a problem as a light emission display device.

The manganese-activated zinc silicate phosphor of the present invention is obtained by mixing, e.g., zinc oxide (ZnO), silicon dioxide (SiO₂), and manganese carbonate (MnCO₃) as phosphor materials, calcining the mixture in a crucible in, e.g., air at 1,000 to 1,300°C for 1 to 5 hours, classifying the obtained calcined material, and removing impurities by washing. The zinc-to-silicon atomic ratio can be adjusted by the blending ratio of ZnO to SiO₃. The desired particle size is obtained by changing the calcining time; the shorter the calcining time, the smaller the particle size. Also, the concentration of the activating agent Mn²⁺ with respect to the base material Znx(SiO₄)_{y} is adjusted by the addition amount of MnCO₃ with respect to the total amount of ZnO and SiO₂, and the number of gram atoms of the activating agent per mol of the base material is favorably 0.01 to 0.02.

The phosphor layer used in the image display device of the present invention can be formed by using, e.g., a slurry method.

To form a phosphor layer of a color image display device by the slurry method, a light absorption layer made of a black pigment and having a predetermined pattern, e.g., a stripe pattern or lattice pattern is formed by photolithography on the inner surface of a glass substrate serving as a face plate. After that, three types of coating solutions respectively containing a green emission phosphor, blue emission phosphor, and red emission phosphor using the manganese-activated zinc silicate phosphor according to the present invention are formed, and coating, drying, and patterning using photolithography are repetitively performed for each phosphor coating solution, thereby forming blue (B), green (G), and red (R) emission phosphor layers in the form of stripes or dots. Note that each color phosphor layer may also be formed by a spraying method or printing method. Patterning by photolithography is also used where necessary even in the spraying method or printing method.

The present invention will be explained in more detail below with reference to the accompanying drawing.

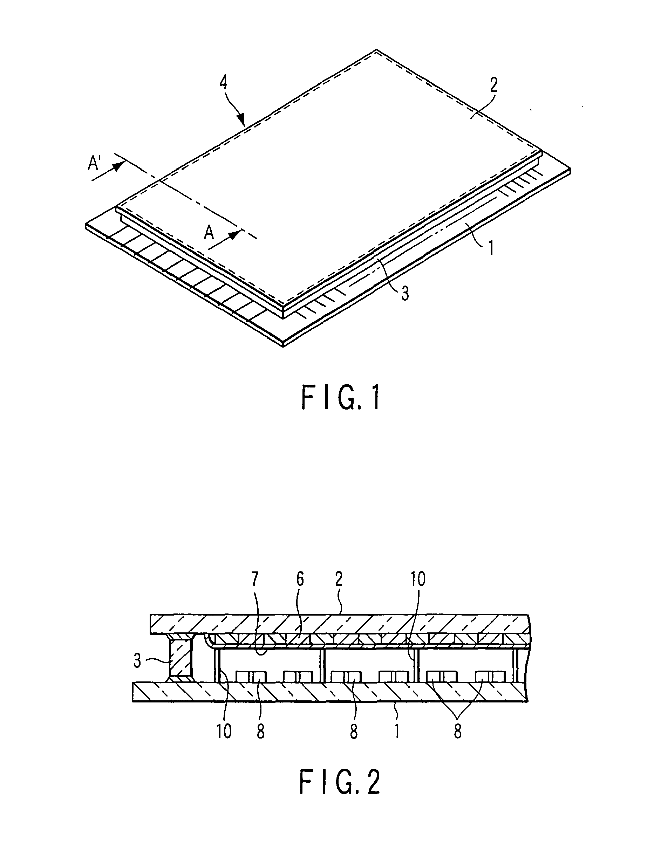

FIG. 1 is a perspective view showing an example of an FED according to the present invention.

FIG. 2 is a sectional view taken along a line A - A' in FIG. 1.

As shown in FIGS. 1 and 2, this FED has a front substrate (face plate) 2 and back substrate (rear plate) 1 each made of rectangular glass, and these substrates are opposed to each other with a spacing of 1 to 2 mm between them. The edges of the front substrate 2 and back substrate 1 are bonded to each other via a rectangular frame-like side wall 3, thereby forming a flat rectangular vacuum enclosure 4 in which a high vacuum of about 10⁻⁴ Pa or better is maintained.

A phosphor screen 6 is formed on the inner surface of the front substrate 2. The phosphor screen 6 includes a phosphor layer which emits red light, green light, and blue light, and a matrix-like, light-shielding layer (not shown). On the phosphor screen 6, a metal back layer 7 which functions as an anode electrode is formed. During display operation, a predetermined anode voltage is applied to the metal back layer 7.

On the inner surface of the back substrate 1, a large number of electron emission elements 8 which emit electron beams for exciting the phosphor layer are formed. The electron emission elements 8 are arrayed into a plurality of columns and a plurality of rows in a one-to-one correspondence with pixels. The electron emission elements are driven by matrix lines (not shown).

Between the back substrate 1 and front substrate 2, a large number of plate-like or columnar spacers 10 are arranged to resist the atmospheric pressure.

The anode voltage is applied to the phosphor screen 6 via the metal back layer 7, and the electron beams emitted from the electron emission elements 8 are accelerated by the anode voltage and collide against the phosphor screen 6. As a consequence, the corresponding phosphor layer emits light and displays an image.

### Examples

The present invention will be explained in more detail below by way of its examples.

### Example 1 & Comparative Example 1

Phosphor materials having the following composition were prepared.

| Phosphor material composition | |
|---|---|
| ZnO | 69.5 parts by weight |
| SiO₂ | 29.4 parts by weight |
| MnCO₃ | 1.1 parts by weight |

The materials having the above composition were mixed and calcined in a crucible in air at 1,200 to 1,300°C for 3 hours. The obtained calcined material was classified, and impurities were removed by washing, thereby obtaining a manganese-activated zinc silicate phosphor having a Zn/Si atomic ratio of 1.75 and an average particle size of 1.8 µm.

As Examples 2 and 3, manganese-activated zinc silicate phosphors having an average particle size of 1.6 µm and Zn/Si atomic ratios of 1.65 and 1.85 were obtained in the same manner as in Example 1 except that the content of ZnO in the phosphor material composition was changed to 68.2 and 70.7 parts by weight, respectively.

As Comparative Examples 1 to 4, manganese-activated zinc silicate phosphors having an average particle size of 1.6 µm and Zn/Si atomic ratios of 1.35, 1.45, 1.55, and 2.0 were obtained in the same manner as in Example 1 except that the content of ZnO in the phosphor material composition was changed to 63.7, 65.3, 66.8, and 72.2 parts by weight, respectively.

In addition, as Comparative Examples 5 to 10, manganese-activated zinc silicate phosphors having an average particle size of 5.5 µm and Zn/Si atomic ratios of 1.1, 1.25, 1.4, 1.55, 1.7, and 2.0 were obtained in the same manner as in Example 1 except that the content of ZnO in the phosphor material composition was changed to 58.9, 61.9, 64.5, 66.8, 68.9, and 72.2 parts by weight, respectively, and the average particle size was changed to 4 to 6 µm larger than that of the phosphor particles in Comparative Examples 1 to 4.

Raster excitation was performed on the obtained manganese-activated zinc silicate phosphor particles in a luminance chamber by setting the vacuum degree to 10⁻⁴ Pa or better, thereby measuring the powder luminance of each phosphor.

After that, the emission luminance of the phosphor screen showing the highest emission luminance in Comparative Examples 5 to 10 in which the phosphors had large average particle sizes was regarded as 100%, and the relative luminances with respect to this emission luminance were calculated.

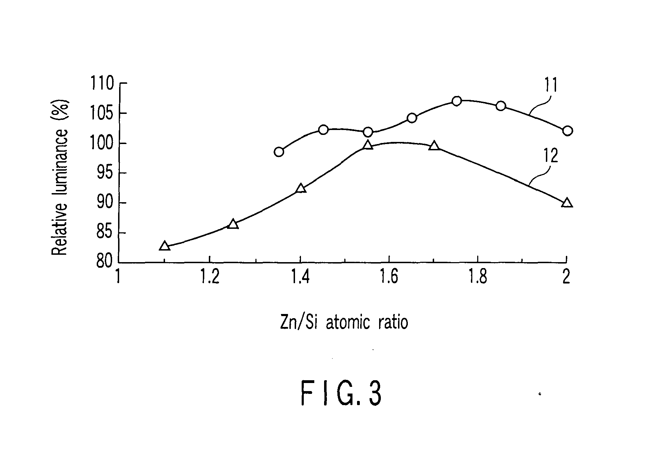

The relationship between the Zn/Si atomic ratio of each phosphor and the obtained relative luminance was plotted on a graph. The obtained graph is shown in FIG. 3.

Referring to FIG. 3, a curve 11 indicates the results obtained when the average particle size was 1.8 µm, and a curve 12 indicates the results obtained when the average particle size was 5.5 µm.

As shown in FIG. 3, all the luminances of the manganese-activated zinc silicate phosphors of Examples 1 to 3 were higher than those of the phosphors (Comparative Examples 5 to 10) having large average particle sizes. Also, of the phosphors having small average particle sizes, those having Zn/Si atomic ratios of 1.7 to 1.9 as in Examples 1 to 3 had relative luminances much higher than those of the phosphors (Comparative Examples 1 to 4) falling outside this range. For example, when the Zn/Si atomic ratio was 1.75 as in Example 1, the relative luminance was about 107%.

When the afterglow time of each phosphor was measured, the afterglow times of Examples 1 to 3 were 6.5, 6.2, and 6.5 ms, respectively, and those of Comparative Examples 1 to 10 were 6.2, 6.2, 6.2, 6.2, 7.2, 7.2, 7.2, 7.0, 6.8, and 6.8 ms, respectively. This demonstrates that even when the average particle size decreases, a manganese-activated zinc silicate phosphor having high emission luminance equivalent to the emission luminance obtained by the conventional average particle size can be obtained for substantially the same afterglow time.

In addition, when the smoothness of the phosphor screens of Examples 1 to 3 was compared with that of the phosphor screens of Comparative Examples 5 to 10 by observing the side surface of a printed phosphor film by using a laser film thickness meter, the smoothness of the phosphor screens of Examples 1 to 3 was better.

Furthermore, it was possible to display good images when a device similar to the image display device shown in FIGS. 1 and 2 was formed by using the obtained manganese-activated zinc silicate phosphor as a green emission phosphor.

## Claims

1. A manganese-activated zinc silicate phosphor **characterized in that** an average particle size is 0.5 to 2.0 µm, and an atomic ratio (Zn/Si) of zinc to silicon is 1.65 to 1.85.

2. A manganese-activated zinc silicate phosphor according to claim 1, **characterized in that** the atomic ratio is 1.7 to 1.8.

3. A manganese-activated zinc silicate phosphor according to claim 1, **characterized in that** an afterglow time is not more than 8 ms.

4. An image display device **characterized in that** comprises a face plate,
an electron source opposed to the face plate,
a phosphor screen formed on one of two major surfaces, which is close to the electron source, of the face plate, emitting light by an electron beam emitted from the electron source, and including a phosphor layer containing a manganese-activated zinc silicate phosphor according to any of claims 1 to 3, and a metal back layer covering the phosphor screen.
